(19) Europäisches Patentamt
European Patent Office
Office européen des brevets

(11) EP 2 549 006 A1

(12) **EUROPEAN PATENT APPLICATION**

(43) Date of publication:
**23.01.2013 Bulletin 2013/04**

(21) Application number: **11175019.6**

(22) Date of filing: **22.07.2011**

(51) Int Cl.:
***D04H 1/64*** *(2012.01)* ***C08L 77/06*** *(2006.01)*
***C08J 5/24*** *(2006.01)* ***C09J 103/02*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rockwool International A/S**
**2640 Hedehusene (DK)**

(72) Inventors:
- **Naerum, Lars**
  **2900 Hellerup (DK)**
- **Nissen, Povl**
  **3650 Olstykke (DK)**
- **Hansen, Erling Lennart**
  **2830 Virum (DK)**

(74) Representative: **Barz, Peter**
**Meissner Bolte**
**Widenmayerstrasse 48**
**80538 München (DE)**

(54) **Urea-modified binder for mineral fibres**

(57) An aqueous binder composition for mineral fibres comprises: (1) a water-soluble binder component obtainable by reacting at least one alkanolamine with at least one polycarboxylic acid or anhydride and, optionally, treating the reaction product with a base; (2) a sugar component; and (3) urea, the proportion of components (1), (2) and (3) being within the range of 10 to 80 wt.% of (1), 15 to 80 wt.% of (2), and 5 to 60 wt.% of (3), based on the solids content of components (1), (2) and (3) as measured after heat treatment for 1 hour at 200°C.

EP 2 549 006 A1

## Description

### Field of the Invention

The present invention relates to a high-yield aqueous binder for mineral fibre products, a method of producing a bonded mineral fibre product using said binder, and a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/- elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up.

Since some of the starting materials used in the production of these binders are rather expensive chemicals, several of the above-mentioned patent publications suggest the use of cheaper carbohydrates, for instance, starch or sugar, as additives, extenders or as reactive components of the binder system. However, the use of carbohydrates in mineral wool binder systems is often accompanied by impaired fire characteristics. For instance, during production of high-density mineral fibre products in production lines with limited cooling zone capacity a phenomenon which has been described as punking may occur. Punking is a term of art used to denote the comparatively rapid flameless oxidation of the binder with a concomitant self-reinforcing generation of heat caused by an exothermic process initiated by hot spots (melt splashes or glowing coke pieces). Odors and fumes given off by such thermal decompositon are offensive, potentially hazardous and are capable of discoloring and staining adjacent materials. Furthermore, punking may be associated with exothermic reactions which increase temperatures through the thickness of the insulation causing a fusing or devitrification of the mineral fibres and eventually creating a fire hazard. In the worst case, punking causes fires in the stacked pallets stored in warehouses or during transportation.

### Summary of the Invention

Accordingly, it was an object of the present invention to provide an aqueous binder composition which is particularly suitable for bonding mineral fibres and is economically produced in high yield.

A further object of the present invention was to provide a mineral fibre product bonded with such a binder composition and having high fire resistance as well as improved anti-punk properties.

In accordance with a first aspect of the present invention, there is provided an aqueous binder composition for mineral fibres comprising:

(1) a water-soluble binder component obtainable by reacting at least one alkanolamine with at least one polycarboxylic acid or anhydride and, optionally, treating the reaction product with a base;
(2) a sugar component; and
(3) urea

the proportion of components (1), (2) and (3) being within the range of 10 to 80 wt.% of (1), 15 to 80 wt.% of (2), and 5 to 60 wt.% of (3), based on the solids content of components (1), (2) and (3) as measured after heat treatment for 1 hour at 200°C.

In accordance with a second aspect of the present invention, there is provided a method of producing a bonded mineral fibre product which comprises the steps of contacting the mineral fibres or mineral fibre product with an aqueous binder composition as defined above, and curing the binder composition.

In accordance with a third aspect of the present invention, there is provided a mineral fibre product comprising mineral fibres in contact with the cured binder composition defined above.

The present inventors have surprisingly found that the reaction yield in the production of a binder system comprising an alkanolamine / polycarboxylic reaction product and urea can be substantially improved by using a sugar component as a third binder component. This allows the production of bonded mineral fibre products using less binder, thereby improving both efficiency and economy of commercial production.

Furthermore, it has been found that a ternary binder system of alkanolamine /polycarboxylic reaction product, sugar component and urea provides a bonded mineral fibre product exhibiting improved fire resistance and anti-punk properties.

**Description of the Preferred Embodiments**

The aqueous binder composition according to the present invention comprises:

(1) a water-soluble binder component obtainable by reacting at least one alkanolamine with at least one polycarboxylic acid or anhydride and, optionally, treating the reaction product with a base;
(2) a sugar component; and
(3) urea

the proportion of components (1), (2) and (3) being within the range of 10 to 80 wt.% of (1), 15 to 80 wt.% of (2), and 5 to 60 wt.% of (3), based on the solids content of components (1), (2) and (3) as measured after heat treatment for 1 hour at 200°C.

Preferably, components (1), (2) and (3) are used in proportions such that the minimum content of component (1) is 20 wt.%, 25 wt.% or 30 wt% and the maximum content is 40 wt., 50 wt.%, 60 wt.% or 70 wt.%; the minimum content of component (2) is 20 wt.%, 30 wt.% or 40 wt.% and the maximum content is 50 wt.%, 60 wt.% or 70 wt.%; and the minimum content of component (3) is 10 wt.%, 15 wt.% or 25 wt.% and the maximum content is 30 wt.%, 35 wt.% or 40 wt.%; all percentages based on the solids content of components (1), (2) and (3) as measured after heat treatment for 1 hour at 200°C.

<u>Binder Component (1)</u>

Binder component (1) of the aqueous binder composition according to the present invention comprises the water-soluble reaction product of an alkanolamine with a carboxylic acid or anhydride.

Alkanolamines

Preferred alkanolamines for use in the preparation of binder component are alkanolamines having at least two hydroxy groups such as, for instance, alkanolamines represented by the formula

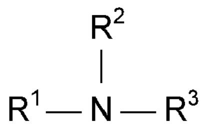

wherein $R^1$ is hydrogen, a $C_{1-10}$ alkyl group or a $C_{1-10}$ hydroxyalkyl group; and $R^2$ and $R^3$ are $C_{1-10}$ hydroxyalkyl groups.

Preferably, $R^2$ and $R^3$, independently are $C_{2-5}$ hydroxyalkyl groups, and $R^1$ is hydrogen, a $C_{1-5}$ alkyl group or a $C_{2-5}$ hydroxyalkyl group. Particularly preferred hydroxyalkyl groups are β-hydroxyalkyl groups.

Specific examples of suitable alkanolamines are monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, aminoethylethanolamine, 3-amino-1,2-propanediol, 2-amino-1,3-propanediol and tris(hydroxymethyl)aminomethane. Diethanolamine is the currently preferred alkanolamine.

Polycarboxylic acid component

The polycarboxylic acid component is generally selected from dicarboxylic, tricarboxylic, tetracarboxylic, pentacarboxylic, and like polycarboxylic acids, anhydrides, salts and combinations thereof.

Preferred polycarboxyl acid components employed as starting materials for reacting with the other binder components are carboxylic anhydrides. The carboxylic anhydride starting material may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

If appropriate, an additional polycarboxylic acid may be employed in the reaction and is preferably added to the reaction mixture before addition of the anhydride reactant. Specific examples of such additional polycarboxylic acids are adipic acid, aspartic acid, azelaic acid, butane tricarboxylic acid, butan tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

Reaction conditions

The reaction between the alkanolamine and polycarboxylic reactants is carried out in the usual manner, for instance, as described in WO 99/36368, WO 01/05725, WO 02/06178, WO 2004/007615 and WO 2006/061249, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In the preparation of binder component (1), the proportion of the alkanolamine and polycarboxylic reactants is preferably selected such that the ratio of equivalents of amine plus hydroxy groups (NH+OH) to equivalents of carboxy groups (COOH) is within the range of from 0.4 to 2.0, more preferably 1.0 to 1.8.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomittant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia ($NH_3$) and organic amines such as diethanolamine (DEA) and triethanolamine (TEA). The base is preferably added to the reaction mixture after the reaction between the alkanol amine and the carboxylic anhydride has been actively stopped by adding water.

<u>Sugar component</u>

The sugar component (2) employed in accordance with the present invention is preferably selected from sucrose and reducing sugars such as hexoses and pentoses, and mixtures thereof.

A reducing sugar is any sugar that, in solution, has an aldehyde or a ketone group which allows the sugar to

act as a reducing agent. In accordance with the present invention, reducing sugars may be used as such or as a carbohydrate compound that yields one or more reducing sugars in situ under thermal curing conditions. The sugar or carbohydrate compound may be a monosaccharide in its aldose or ketose form, a disaccharide, a triose, a tetrose, a pentose, a hexose, or a heptose; or a di-, oligo- or polysaccharide; or combinations thereof. Specific examples are glucose (= dextrose), starch hydrolysates such as corn syrup, arabinose, xylose, ribose, galactose, mannose, fructose, maltose, lactose and invert sugar. Compounds such as sorbitol and mannitol, on the other hand, which do not contain or supply aldehyde or ketone groups, are less effective in the instant invention.

Crystalline dextrose is normally produced by subjecting an aqueous slurry of starch to hydrolysis by means of heat, acid or enzymes. Depending on the reaction conditions employed in the hydrolysis of starch, a variety of mixtures of glucose and intermediates is obtained which may be characterized by their DE number. DE is an abbreviation for Dextrose Equivalent and is defined as the content of reducing sugars, expressed as the number of grams of anhydrous D-glucose per 100 g of the dry matter in the sample, when determined by the method specified in International Standard ISO 5377-1981 (E). This method measures reducing end groups and attaches a DE of 100 to pure glucose (= dextrose) and a DE of 0 to pure starch.

Only glucose syrup of high DE can crystallise easily and yield a product in powder or granular form. A most popular crystallised product is dextrose monohydrate with application in medicine and chewing tablets. Dextrose monohydrate is pure glucose (DE 100).

With lower DE numbers, the syrup gradually loses its tendency to crystallise. Below approx. 45 DE, the syrup can be concentrated into a stable, non-crystallising liquid, for instance, Standard 42 DE syrup which finds wide spread use in canned fruit preserves, ice cream, bakery products, jam, candy, and all kinds of confectionery.

A preferred sugar component for use in the present invention is a reducing sugar having a dextrose equivalent DE of 40 to 100, preferably 50 to 100, more preferably 86 to 100, and most preferably 90 to 100. Particularly preferred reducing sugar components are dextrose, high DE glucose syrup, high-fructose syrup and mixtures thereof. Commercially available high DE glucose syrups are "Glucose syrup" from Cargill (DE > 90) and "Sirodex 431" from Syral (DE = 95).

For commercial and practical reasons, dextrose and sucrose are the most preferred sugar components in the present invention.

Urea

Urea is added to the binder composition in the amounts indicated in substance or, preferably, in aqueous solution.

Binder composition

The properties of the final binder composition, such as curing behaviour, durability and moisture take-up are determined by the total ratio of reactive groups present. Therefore, for optimum performance, alkanolamine, polycarboxylic acid or anhydride, sugar component and urea are employed in proportions such that the ratio of total equivalents of amine groups plus hydroxy groups (NH+OH), including amino groups from urea, to equivalents of carboxy groups (COOH) in the binder composition is greater than 2.5, preferably greater than 5, and more preferably greater than 10.

The binder composition according to the present invention preferably has a solids content of from 10 to 40 wt. %. This is often the concentration range of the binder in storage containers before use. In a form ready for application, the binder preferably has a solids content of from 1 to 30 wt.%. For transportation, a solids content of the binder composition of from 60 to 75 wt.% is frequently employed.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of binder component (lower reaction temperature, stopping the reaction by adding water at an earlier reaction stage, etc.), and by properly adjusting the relative amounts of the binder components and water solvent.

Additives

The binder compositions according to the present invention may additionally comprise one or more conventional binder additives. These include, for instance, curing accelerators such as, e.g., β-hydroxyalkylamides; the free acid and salt forms of phosphoric acid, hypophosphorous acid and phosphonic acid. Other strong acids such as boric acid, sulphuric acid, nitric acid and p-toluenesulphonic acid may also be used, either alone or in combination with the just mentioned acids, in particular with phosphoric, hypophosphorous acid or phosphonic acid. Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as starch, clay, silicates and magnesium hydroxide; pigments such as titanium dioxide; hydrophobizing

agents such as fluorinated compounds, mineral oils and silicone oils and resins; flame retardants; corrosion inhibitors such as thiourea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

The final aqueous binder composition generally has a solids content of from 1 to 25 wt.% and a pH of 6 or greater.

Mineral fibre product

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. Generally, the binder is sprayed immediately after fibrillation of the mineral melt on to the airborne mineral fibres. The aqueous binder composition is normally applied in an amount of 0.1 to 10 %, preferably 0.2 to 8 % by weight, of the bonded mineral fibre product on a dry basis.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 10 to 250 kg/$m^3$, preferably 20 to 200 kg/$m^3$. The mineral fibre products generally have a loss on ignition (LOI) within the range of 0.3 to 12.0 %, preferably 0.5 to 8.0 %.

Although the aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the invention without limiting its scope. In this application, the solids content (dry matter) is determined at 200 °C, 1 hour and expressed as SC (wt.%). Measuring the SC after exposure to 200°C for 1 hour is a standard method for determining "production-relevant" binder contents which are in direct relationship to the amount of cured binder in the final product (loss on ignition).

**Examples**

Preparation of binder component (1)

158 g of diethanolamine (DEA) are placed in a 1-litre glass reactor provided with a stirrer and a heating/cooling jacket. The temperature of the diethanolamine is raised to 60°C whereafter 91 g of tetrahydrophthalic anhydride (THPA) are added. After raising the temperature and keeping it at 130°C, a second portion of 46 g of tetrahydrophthalic anhydride is added followed by 86 g of trimellitic anhydride (TMA). After reacting at 130°C for 1 hour, the mixture is cooled to 95°C and 210 g of water added and the mixture stirred for 1 hour.

After cooling to ambient temperature, 1% of hypophosphorous acid, 0.5% of a silane ($\gamma$-aminopropyltriethoxysilane) and 250 ml/kg solids of ammonia (25%) were added to give Component (1).

Preparation of binder compositions

The binder compositions in Table 1 were made by mixing the components stated in the table in the form of

aqueous solutions each adjusted to a solids content (SC) of 20%.

A resulting SC of the mixture of 20% was taken as 100% reaction yield by definition.

Table 1 shows the SC actually measured and the corresponding reaction yields.

Table 1

| Binder No. | Mixing ratio (% SC) Comp. 1 | Dextrose | Urea | SC measured | Reaction yield |
|---|---|---|---|---|---|
| 1 | 60% | 0% | 40% | 11,40% | 57% |
| 2 | 40% | 20% | 40% | 13,80% | 69% |
| 3 | 20% | 40% | 40% | 15,10% | 76% |
| 4 | 40% | 0% | 60% | 11,50% | 58% |
| 5 | 20% | 20% | 60% | 13,50% | 68% |
| 6 | 81% | 0% | 19% | 14,12% | 71% |
| 7 | 60% | 20% | 20% | 14,80% | 74% |
| 8 | 40% | 40% | 20% | 15,80% | 79% |
| 9 | 20% | 60% | 20% | 17,10% | 86% |

The results in Table 1 show that the reaction yield of a urea-modified alkanolamine-polycarboxylic binder system is substantially increased when using dextrose as an additional binder component.

Determination of solids content (SC)

In order to determine the amount of non-volatile material that remains after heat treatment for 1 hour at 200°C, a specified amount of material is dried and cured in an incubator. The amount of solids is determined by weighing prior to and after the heat treatment.

Apparatus and Reagents:

Finn-pipette 1-5 ml
Incubator with air circulation 200°C +/- 5°C
Analytical balance, accuracy 0.001 g
Aluminium trays
Disc of mineral wool, annealed at 590°C for 30 minutes, density 80-100 kg/$m^3$, thickness approx. 10 mm, and diameter approx. 50 mm.

Procedure:

Place the mineral wool disc in an aluminium tray. Determine the total weight of tray and wool (M1). Shake the sample before sampling. Suck up 2.5 ml binder in a pipette and distribute it over the mineral wool disc, weigh the disc again (M2). Place the sample in the incubator at 200°C +/- 5°C for one hour. Weigh the sample after a cooling time of 20 minutes (M3). Always perform the determination in duplicate.

Calculation and Expression of results:

Indicate the result as % with 1 decimal. Indicate the result as % of the amount weighed.

$$\text{Non-volatile} = \frac{M3-M1}{M2-M1} x100\%$$

Indicate the result as the average value of the duplicate determination. The two individual results may not deviate by more than 0.5% (absolute SC%).

## Claims

1. An aqueous binder composition for mineral fibres comprising:

    (1) a water-soluble binder component obtainable by reacting at least one alkanolamine with at least one polycarboxylic acid or anhydride and, optionally, treating the reaction product with a base;
    (2) a sugar component; and
    (3) urea

    the proportion of components (1), (2) and (3) being within the range of 10 to 80 wt.% of (1), 15 to 80 wt.% of (2), and 5 to 60 wt.% of (3), based on the solids content of components (1), (2) and (3) as measured after heat treatment for 1 hour at 200°C.

2. The binder composition of claim 1, wherein the alkanolamine is selected from monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol, aminoethylethanolamine and tris-(hydroxymethyl)-aminomethane.

3. The binder composition of claim 1 or 2, wherein the polycarboxylic acid or anhydride is selected from dicarboxylic, tricarboxylic, tetracarboxylic and pentacarboxylic acids and anhydrides, and combinations thereof.

4. The binder composition of claim 3, wherein the polycarboxylic acid or anhydride is selected from at least one of tetrahydrophthalic acid, hexahydrophthalic acid, methyltetrahydrophthalic acid, phthalic acid, methylphthalic acid, trimellitic acid, pyromellitic acid and the corresponding anhydrides.

5. The binder composition of claim 4, wherein the polycarboxylic acid component additionally comprises a polycarboxylic acid selected from adipic acid, aspartic acid, azelaic acid, butane tricarboxylic acid, butane tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

6. The binder composition of any one of the preceding claims, wherein the sugar component (2) is selected from sucrose and reducing sugars such as hexoses and pentoses, and mixtures thereof.

7. The binder composition of claim 6, wherein the sugar component (2) is a reducing sugar having a dextrose equivalent (DE) of 40 to 100, preferably 50 to 100, and more preferably 86 to 100.

8. The binder composition of claim 6 or 7, wherein the sugar component (2) is a reducing sugar selected from dextrose, high DE glucose syrup and high-fructose syrup.

9. The binder composition of any one of the preceding claims, wherein the proportion of components (1), (2) and (3) is within the range of 10 to 70 wt.% of (1), 20 to 70 wt.% of (2), and 10 to 40 wt.% of (3), based on the solids content of components (1), (2) and (3) as measured after heat treatment for 1 hour at 200°C.

10. The binder composition of any one of the preceding claims, wherein the proportion of components (1), (2) and (3) is within the range of 20 to 50 wt.% of (1), 30 to 60 wt.% of (2), and 20 to 40 wt.% of (3), based on the solids content of components (1), (2) and (3) as measured after heat treatment for 1 hour at 200°C.

11. The binder composition of any one of the preceding claims, wherein alkanolamine, polycarboxylic acid or anhydride, sugar component and urea are employed in proportions such that the ratio of total equivalents of amine groups plus hydroxy groups (NH+OH), including amino groups from urea, to equivalents of carboxy groups (COOH) in the binder composition is greater than 2.5.

12. A method of producing a bonded mineral fibre product which comprises the steps of contacting the mineral fibres or mineral fibre product with a binder composition according to any one of claims 1 to 11, and curing the binder composition.

13. The method of claim 12 wherein curing is effected at a curing temperature of from about 150°C to about 350°C.

14. Mineral fibre product comprising mineral fibres in contact with the cured binder composition according to any one of claims 1 to 11.

Europäisches Patentamt
European Patent Office
Office européen des brevets

# EUROPEAN SEARCH REPORT

Application Number
EP 11 17 5019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2008/023032 A1 (ROCKWOOL INT [DK]; NISSEN POVL [DK]) 28 February 2008 (2008-02-28) * page 7, line 31 - page 8, line 4 * * page 2, line 11 - page 8, line 21 * * claims * | 1-5,9, 10,12-14 | INV. D04H1/64 C08L77/06 C08J5/24 C09J103/02 |
| A | EP 2 230 222 A1 (ROCKWOOL INT [DK]) 22 September 2010 (2010-09-22) * paragraphs [0055], [0069]; claims 1,10,12 * | 1-14 | |
| A | WO 2011/028964 A1 (GEORGIA PACIFIC CHEMICALS LLC [US]; TUTIN KIM [US]; SHOEMAKE KELLY [US) 10 March 2011 (2011-03-10) * paragraphs [0074], [0-77], [0089] - [0091], [0102] - [0104] * | 1-14 | |
| A | EP 1 170 265 A1 (ROCKWOOL INT [DK]) 9 January 2002 (2002-01-09) * claims 1,14,15 * | 1 | TECHNICAL FIELDS SEARCHED (IPC) |
| A | EP 2 093 266 A1 (ROCKWOOL INT [DK]) 26 August 2009 (2009-08-26) * paragraph [0040]; claims * | 1 | D04H C08L C08J C09J |
| A | EP 1 382 642 A1 (ROCKWOOL INT [DK]) 21 January 2004 (2004-01-21) * paragraphs [0028] - [0034]; claims * | 1 | |

The present search report has been drawn up for all claims

| Place of search | Date of completion of the search | Examiner |
|---|---|---|
| The Hague | 9 September 2011 | Barathe, Rainier |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 17 5019

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2011

| Patent document cited in search report | Publication date | Patent family member(s) | Publication date |
|---|---|---|---|
| WO 2008023032 A1 | 28-02-2008 | AU 2007287565 A1 | 28-02-2008 |
| | | CA 2660148 A1 | 28-02-2008 |
| | | EP 1892225 A1 | 27-02-2008 |
| | | EP 2054354 A1 | 06-05-2009 |
| | | RU 2009110185 A | 27-09-2010 |
| | | US 2010012879 A1 | 21-01-2010 |
| EP 2230222 A1 | 22-09-2010 | WO 2010106181 A1 | 23-09-2010 |
| WO 2011028964 A1 | 10-03-2011 | US 2011054098 A1 | 03-03-2011 |
| EP 1170265 A1 | 09-01-2002 | AU 8194801 A | 30-01-2002 |
| | | AU 2001281948 B2 | 21-12-2006 |
| | | CA 2410672 A1 | 24-01-2002 |
| | | CN 1440372 A | 03-09-2003 |
| | | CZ 20024230 A3 | 14-01-2004 |
| | | WO 0206178 A1 | 24-01-2002 |
| | | EP 1296903 A1 | 02-04-2003 |
| | | EP 2075239 A2 | 01-07-2009 |
| | | HU 0301295 A2 | 28-08-2003 |
| | | JP 2004504503 A | 12-02-2004 |
| | | PL 361160 A1 | 20-09-2004 |
| | | UA 81598 C2 | 25-01-2008 |
| | | US 2004024170 A1 | 05-02-2004 |
| EP 2093266 A1 | 26-08-2009 | NONE | |
| EP 1382642 A1 | 21-01-2004 | AT 319778 T | 15-03-2006 |
| | | AU 2003250055 A1 | 02-02-2004 |
| | | CA 2489817 A1 | 22-01-2004 |
| | | CN 1668700 A | 14-09-2005 |
| | | DE 60303949 T2 | 16-11-2006 |
| | | DK 1521807 T3 | 03-07-2006 |
| | | WO 2004007615 A1 | 22-01-2004 |
| | | EP 1521807 A1 | 13-04-2005 |
| | | ES 2259148 T3 | 16-09-2006 |
| | | HR 20041133 A2 | 30-06-2005 |
| | | JP 2005533145 A | 04-11-2005 |
| | | SI 1521807 T1 | 31-08-2006 |
| | | UA 80138 C2 | 27-08-2007 |
| | | US 2006111480 A1 | 25-05-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A